# FASCICULE DE BREVET EUROPEEN

(11) **EP 0 693 186 B1**
(45) Date de publication et mention de la délivrance du brevet: **18.06.1997**
(21) Numéro de dépôt: 94912579.3
(22) Date de dépôt: 31.03.1994
(51) Int. Cl.: G02B 1/10

(54) **PROCEDE DE FABRICATION DE COUCHES MINCES PRESENTANT DES PROPRIETES OPTIQUES ET DES PROPRIETES DE RESISTANCE A L'ABRASION**
HERSTELLUNGSVERFAHREN FÜR DÜNNSCHICHTEN MIT OPTISCHEN UND ABRIEBFESTEN EIGENSCHAFTEN
METHOD FOR PRODUCING THIN FILMS HAVING OPTICAL AND ABRASION RESISTANCE PROPERTIES

(30) Priorité: 05.04.1993 FR 9303987
(43) Date de publication de la demande: 24.01.1996
(73) Titulaire: COMMISSARIAT A L'ENERGIE ATOMIQUE, 75752 Paris Cédex 15 (FR)
(72) Inventeur: FLOCH, Hervé, F-91800 Brunoy (FR); BELLEVILLE, Philippe, F-92400 Courbevoie (FR)
(74) Mandataire: Des Termes, Monique
(86) Numéro de dépôt international: FR9400368
(87) Numéro de publication internationale: WO9423315

(56) Documents cités:
- EP-A- 0 533 521
- FR-A- 2 680 583
- US-A- 4 271 210
- US-A- 4 929 278
- US-A- 4 966 812
- APPL. PHYS. LETT., vol.52, no.5, 1988 pages 410 - 412 R.G.MUSKET 'enhanced adhesion at oxide/oxide interfaces by ion beam stitching'
- AMERICAN CERAMIC SOC. BULLETIN, vol.69, no.7, 1990 pages 1141 - 1143 H.G.FLOCH 'colloidal sol gel optical coatings'
- APPL. PHYS. LETT., vol.52, no.5, 1988, pp 410-412; R.G.MUSKET: 'Enhanced adhesion at oxide/oxide interfaces by ion beam stitching'
- AMERICAN CERAMIC SOC. BULLETIN, vol.69, no.7, 1990, pp 1141-1143; H.G. FLOCH: 'Colloidal sol gel optical coatings'

## Description

La présente invention concerne un procédé de fabrication de couches minces présentant des propriétés optiques et des propriétés de résistance à l'abrasion.

Les couches minces sont constituées par un film présentant certaines propriétés optiques spécifiques, par exemple, des propriétés antireflets ou réfléchissantes, ce film étant déposé sur un substrat organique ou inorganique, (c'est-à-dire notamment les plastiques ou les substrats vitreux). Ces couches minces trouvent une multitude d'application, notamment dans les domaines suivants : les lasers de forte puissance, les applications solaires, thermiques et photovoltaïques, les systèmes optiques intégrés ou encore dans les applications architecturales comme les panneaux vitrés extérieurs. Ces couches minces sont d'ores et déjà utilisées dans des systèmes optiques pour minimiser les pertes thermiques, concentrer et focaliser l'énergie lumineuse et enfin protéger certains éléments absorbants.

Divers procédés de fabrication de ces couches minces ont été mis au point et notamment la synthèse par chimie douce, c'est-à-dire le dépôt par voie sol/gel dont la particularité est la suppression de l'étape de traitement thermique à température élevée.

Parmi les procédés de dépôt par voie sol/gel, l'une des techniques consiste à préparer des solutions traitantes de nature colloïdale et à les déposer sur un substrat. En d'autres termes, cette technique consiste à former une suspension stable et homogène de particules solides (colloïdes) dispersées dans un solvant liquide, cette suspension constituant ce que l'on appelle un "sol", puis à laisser évaporer ce solvant. Pour la réalisation de couches minces, le solvant utilisé doit être suffisamment volatile pour s'évaporer facilement et laisser place à un dépôt de particules solides sur le substrat, l'indice de réfraction de ce dépôt déterminant les propriétés optiques de celui-ci.

Les techniques de dépôt utilisées peuvent être diverses. On connaît par exemple, des techniques de trempage (connues sous le terme anglais de "dip-coating"), des techniques d'enduction centrifuge ("spin-coating" en anglais), des techniques d'enduction laminaire ("laminar-flow-coating" en anglais), des techniques d'épandage ("spray-coating" en anglais), des techniques d'engobage ("slip-casting" en anglais) ou des techniques utilisant un couteau horizontal pour le dépôt ("tape-casting" en anglais).

Des exemples de réalisation de couches sol/gel sont décrits notamment dans la demande de brevet US 7,148,458 (NTIS) correspondant aux brevets US 4,929,278 et US 4,966,812, ou dans les brevets US 2,432,483 et US 4,271,210.

La demande de brevet US 7,148,458 (NTIS) décrit un procédé de dépôt de film antireflet sur des substrats plastiques, consistant à synthétiser-un gel éthanolique dans le système SiO₂ -B₂O₃ -Al₂O₃ -BaO jusqu'à obtenir une certaine complexité moléculaire, puis à reliquéfier ce gel en cassant mécaniquement certains ponts interpolymériques. On obtient ainsi un film poreux à faible indice de réfraction (environ 1,23), réalisé à température ambiante, ce qui permet une adaptation aux substrats en plastique.

Les brevets américains 2,432,484 et 4,271,210 divulguent la possibilité d'utiliser des colloïdes de silice ou d'alumine pour la réalisation de revêtements diélectriques antireflets, permettant d'augmenter la porosité de ces revêtements et donc d'abaisser leur indice de réfraction. Si ces procédés présentent l'avantage de pouvoir être mis en oeuvre à de basses températures, les couches colloïdales obtenues ont une très faible résistance mécanique et sont particulièrement sensibles à tout contact physique.

Par ailleurs, l'article intitulé "Colloïdal Sol-Gel Optical Coatings", paru dans "The American Ceramic Society Bulletin", vol. 69, n° 7, pp. 1141-1143, 1990, décrit un procédé de dépôt de couches minces par voie sol/gel utilisant l'enduction centrifuge.

Toutefois, la nature même de ces films colloïdaux, c'est-à-dire poreux, sous-entend une faible résistance mécanique de ces films, tant du point de vue de l'abrasion, que de celui de l'adhésion au substrat sur lequel ils ont été déposés. De tels dépôts ne supportent donc aucun contact physique que ce soit le toucher ou l'essuyage, sans être endommagés. Les seules forces de cohésion qui existent dans ces films colloïdaux sont du type adsorption physique et il n'existe aucune liaison chimique entre les particules et le substrat, ni entre les particules elles-mêmes.

On connaît déjà d'après l'art antérieur, trois documents faisant référence à une amélioration significative de la tenue mécanique des couches minces optiques à base de silice colloïdale (SiO₂).

Le brevet US 2,432,484 divulgue l'utilisation d'un produit composé d'alcool et de tétraéthylorthosilicate et servant de liant chimique entre les particules colloïdales, de manière à renforcer la cohésion de l'édifice poreux. Ce liant chimique est soit appliqué sur la couche de silice colloïdale déjà déposée, soit incorporé dans le milieu traitant (c'est-à-dire le sol colloïdal) et l'ensemble est appliqué en un seul traitement. Compte tenu de la proportion de liant chimique utilisé, la porosité du dépôt colloïdal reste quasiment inchangée et l'on conserve de ce fait les propriétés optiques. La résistance mécanique du film ainsi renforcé autorise le toucher et l'essuyage. De plus, un traitement thermique supplémentaire du revêtement à faible température, c'est-à-dire inférieur à 100°C, permet d'améliorer encore cette résistance. Toutefois, un tel dépôt reste vulnérable en cas de forte agression abrasive.

On connaît également d'après un article de R.G. MUSKET et al., du Lawrence Livermore National Laboratory de Californie, paru dans Appl. Phys. Lett., vol. 52(5), 1988, un procédé d'accroissement de l'adhésion de l'interface oxyde/oxyde, à l'aide d'un faisceau d'ions. Les auteurs décrivent un traitement par irradiation à 200 keV, d'ions hélium He⁺ de couches antireflets à base de silice poreuse. Ce traitement permet d'améliorer l'adhésion des particules entre elles et des particules avec le substrat, ce qui assure à la couche ainsi traitée une résistance au nettoyage optique habituel (essuyage) sans modification des performances optiques. L'explication avancée pour ce phénomène repose sur une réactivité de surface des particules colloïdales, accrue grâce au bombardement ionique.

On connaît également d'après la demande de brevet FR 2,680,583 du déposant, un procédé permettant le dépôt sur un substrat, de couches minces colloïdales résistantes à l'abrasion. Ce procédé divulgue l'utilisation d'une couche de promoteur d'adhérence (silanes) placée entre le substrat et la couche antireflet et d'une couche d'agent de couplage (silazanes) placée entre ladite couche antireflet et une couche antiabrasive (polymère fluoré). La tenue mécanique de ce film composite est telle qu'il conserve son intégrité, même après une agression à la paille de fer, après un gommage (20 shores) ou un séjour en milieu ultrasonique acide. Les couches minces ainsi obtenues présentent également une bonne résistance climatique. Toutefois, ce procédé est long à mettre en oeuvre.

En conséquence, l'invention a pour but de résoudre les inconvénients précités et de permettre l'obtention de couches minces optiques présentant de bonnes propriétés de tenue mécanique, c'est-à-dire une bonne résistance à l'abrasion et une adhésion satisfaisante sur le substrat sur lequel elles sont déposées.

A cet effet, l'invention concerne un procédé de fabrication de couches minces présentant des propriétés optiques et des propriétés de résistance à l'abrasion.

Selon les caractéristiques de l'invention, ce procédé comprend au moins un cycle composé des étapes consistant à :
- appliquer sur un substrat au moins une couche sol-gel antireflet constituée par une suspension colloïdale d'oxyde de silicium dispersée dans un alcool aliphatique,
- laisser sécher cette couche antireflet, et
- faire subir au substrat recouvert de ladite couche de silice colloïdale, un traitement alcalin en milieu liquide ou gazeux.

Grâce à ce traitement alcalin, il est possible de durcir le dépôt de la couche sol-gel, de façon à améliorer nettement ses propriétés de résistance à l'abrasion. En outre, cet effet de durcissement est obtenu à température ambiante, ce qui permet de traiter des substrats de nature organique tels que les matières plastiques par exemple.

De préférence, le traitement alcalin est effectué en plaçant le substrat recouvert de la couche antireflet dans une enceinte étanche remplie de vapeurs d'ammoniac.

Après traitement à l'ammoniac, la couche mince supporte le contact physique, c'est-à-dire le toucher avec des gants et également plusieurs essuyages au papier optique imbibé d'alcool (appelé en anglais "drag-wipe"), sans dégats macroscopiques visibles et sans altération des performances optiques. En outre, on observe que l'effet des vapeurs d'ammoniac se traduit optiquement par le déplacement de la fonction antireflet vers de courtes longueurs d'onde.

Enfin, ce procédé est simple à mettre en oeuvre et de faible coût.

L'invention sera mieux comprise à la lecture de la description suivante d'un mode de réalisation de l'invention donné à titre illustratif et non limitatif, cette description étant faite en faisant référence aux dessins joints, dans lesquels :
- les figures 1 à 4 illustrent différentes étapes du procédé de fabrication selon l'invention,
- la figure 5 est un graphique illustrant la variation de transmission optique (T) de différentes couches minces, en fonction de la longueur d'onde (λλ),
- la figure 6 est un graphique représentant la valeur de pic de transmission optique (λ/4) en fonction de la durée du traitement de la couche mince par des vapeurs d'ammoniac concentrées,
- la figure 7 est un schéma illustrant une réaction chimique, et
- la figure 8 est un graphique représentant la variation de transmission optique (T) en fonction de la longueur d'onde (λ) pour des couches antireflets selon l'invention ayant subies différents tests.

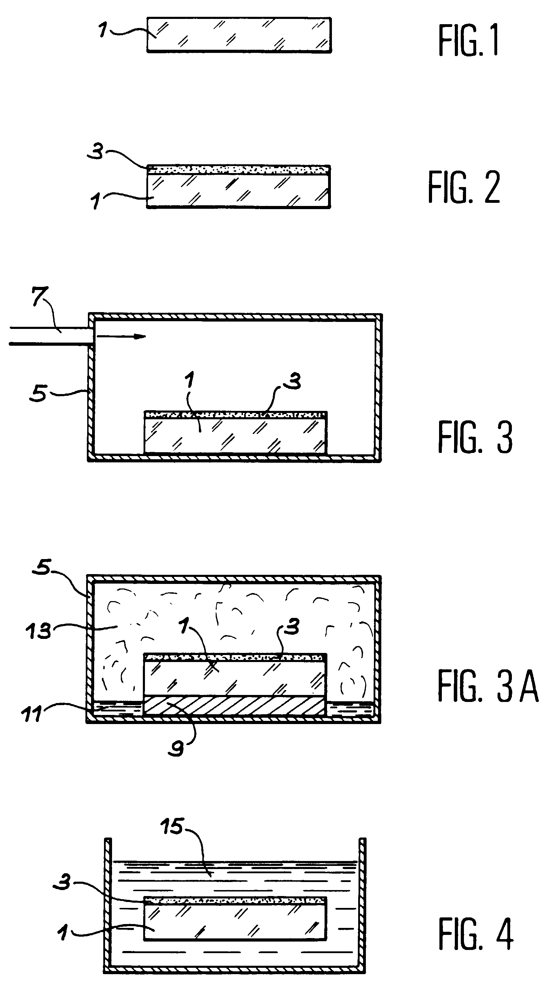

Comme illustré sur la figure 1, la couche mince est déposée sur un substrat 1. Ce substrat 1 est de nature organique ou inorganique.

Dans la suite de la description, le terme "substrat organique" désigne plus précisément un substrat plastique, par exemple, l'un de ceux choisis parmi les polyacrylates, les polycarbonates, les polyallylcarbonates et les polyamides. Toutefois, cette liste n'est pas limitative et couvre de façon plus générale les matériaux polymères.

Le terme "substrat inorganique" couvre plus précisément un substrat vitreux, c'est-à-dire par exemple les matériaux amorphes ou même cristallins et notamment la silice, les verres borosilicatés, à l'exclusion des fluorophosphates et des phosphates.

Avant tout dépôt, le substrat est nettoyé, par exemple à l'aide d'acide fluorhydrique dilué et d'une solution détergente.

Comme illustré en figure 2, une couche antireflet 3 est déposée sur le substrat 1. Cette couche antireflet 3 est préparée selon la technique "sol-gel" traduisant le terme "solution-gélatine". On rappelle qu'un sol est un milieu colloïdal et qu'un gel est une masse visqueuse, élastique, formée à partir de solutions et de suspensions colloïdales et qui présente une structure de liquide figé. De façon classique, cette couche antireflet 3 est issue d'une suspension de colloïdes de silice monodispersée, d'environ 100 à 200Å de diamètre, dispersés dans un solvant.

La solution colloïdale est synthétisée à partir d'un précurseur moléculaire choisi de préférence parmi les alcoxydes, de formule M(OR)_{*n*}, (M représentant un métal ou un métalloïde, OR un radical alcoxy de 1 à 6 atomes de carbone et n représentant la valence du métal). Dans le cas présent, le sol de silice peut être obtenu par une hydrolyse d'un précurseur tel que par exemple, le tétraéthylorthosilicate, en milieu alcoolique basique. L'alcool aliphatique couramment utilisé comme solvant est par exemple l'éthanol. Toutefois, on peut également utiliser d'autres précurseurs tels que le tétraméthylorthosilicate ou d'autres alcoxydes de silicium. On peut utiliser également un précuseur minéral (sel métallique).

Le dépôt de la couche antireflet 3 peut s'effectuer par l'une des techniques citées dans l'introduction.

Le substrat 1 recouvert de la couche antireflet 3 est alors soumis à un traitement alcalin en phase liquide ou gazeuse.

La figure 3 illustre un premier mode de réalisation du traitement alcalin, dans lequel le substrat 1 recouvert de la couche antireflet 3 est placé dans une enceinte close 5 à l'intérieur de laquelle on fait pénétrer des vapeurs d'ammoniac (NH₃), par l'orifice 7.

La figure 3A illustre une variante du premier mode de réalisation, dans laquelle le substrat 1 recouvert de la couche antireflet 3 est placé face recouverte vers le haut sur un support 9, à l'intérieur de l'enceinte close 5. Une solution aqueuse d'ammoniaque 11, volatile, est placée dans le fond de l'enceinte de façon à produire les vapeurs d'ammoniac 13.

Dans les deux variantes précitées, la durée du traitement par les vapeurs d'ammoniac est comprise entre 2 et 24 heures. La concentration d'ammoniac ou d'ammoniaque est comprise entre 5 et 50% en masse.

Bien que ces deux variantes du premier mode de réalisation du traitement alcalin soient préférées, il est également possible d'effectuer ce traitement en plongeant le substrat 1 recouvert de la couche plongeant le substrat 1 recouvert de la couche antireflet 3 dans une solution alcaline 15, comme illustré en figure 4. La solution alcaline 15 est choisie parmi la soude (NaOH), la potasse (KOH), le tétraméthylammonium hydroxyde *(N(CH*_{*3*}*)*_{*4*}*OH)*, l'hydroxylamine (NH₂OH), la diéthanolamine (*NH(CH*_{*2*}*OHCH*_{*2*}*)*_{*2*}) ou l'ammoniaque (NH₄OH). Ces solutions alcalines sont diluées dans un solvant faiblement dissociant, c'est-à-dire présentant une constante diélectrique ε faible. Ce solvant est choisi par exemple parmi les alcools aliphatiques. De préférence, on utilise l'éthanol.

On notera que l'emploi de solutions basiques aqueuses dont le pH est supérieur à 9, ne produit aucune amélioration à la résistance à l'abrasion mais provoque au contraire un lessivage de la couche sol-gel déposée.

On a pu constater après le traitement alcalin et notamment après le traitement à l'ammoniac que la couche antireflet 3 supportait un contact physique, c'est-à-dire pouvait être manipulée avec des gants et pouvait également supporter plusieurs essuyages au papier optique imbibé d'alcool (connu sous le terme anglais de test "drag-wipe"), sans dégradation et sans altération des performances optiques. Par ailleurs, on a pu constater également une modification des propriétés optiques de la couche ainsi traitée.

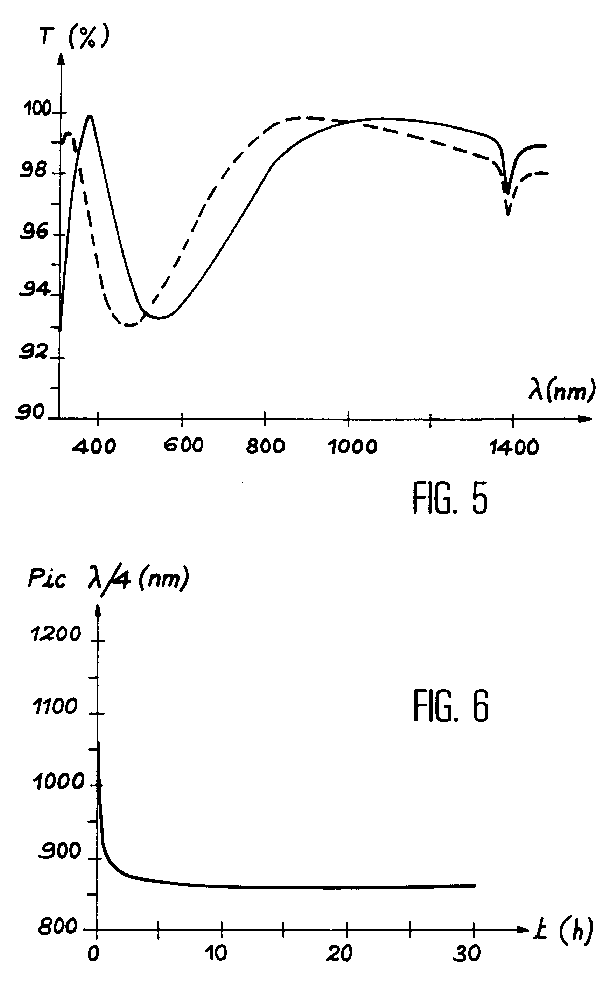

La figure 5 jointe illustre l'effet du traitement par des vapeurs d'ammoniac sur la fonction optique antireflet de la couche mince 3. La courbe en trait plein illustre la valeur de la transmission optique obtenue pour un substrat 1 recouvert d'une couche mince antireflet 3 non traitée par des vapeurs d'ammoniac. La courbe en pointillés illustre au contraire les résultats obtenus après un traitement par des vapeurs d'ammoniac.

On constate sur cette figure 5 que l'effet du traitement par les vapeurs d'ammoniac se traduit optiquement par le déplacement de la fonction antireflet vers des longueurs d'onde plus petites. L'ampleur du déplacement du maximum de transmission (pic) est directement liée à celle du traitement ammoniacal, c'est-à-dire à la concentration des vapeurs d'ammoniac utilisées et à la durée du traitement. Le déplacement du pic traduit optiquement le phénomène physique d'amincissement de la couche mince, puisque l'épaisseur déposée est proportionnelle à la position du pic de transmission.

La figure 6 jointe illustre cette variation du déplacement du pic de transmission (λ/4) d'une monocouche de SiO₂, en fonction du temps de séjour dans les vapeurs d'ammoniac concentrées. Il faut tenir compte de ce déplacement pour l'optimisation de la fonction antireflet à une longueur d'onde donnée après le traitement à l'ammoniac. Lors de cette évolution spectrale, il faut préciser que la dérive du pic (λ/4) vers de courtes longueurs d'onde ne s'accompagne pas de modifications de son amplitiude (valeur de transmission maximum (Tₘₐₓ)). L'ammoniac a uniquement pour effet de translater le spectre photométrique.

Ceci signifie que la couche antireflet 3 s'amincit sans que l'indice de réfraction ne varie, la porosité de la couche est donc conservée. La variation d'épaisseur de la couche mince représente une diminution totale de l'ordre de 20% par rapport à sa valeur initiale. Cet équilibre est atteint après environ 20 heures de séjour dans les vapeurs d'ammoniac et il est irréversible.

Les observations spectrales (amincissement du film) et l'amélioration des propriétés mécaniques de celui-ci, c'est-à-dire l'essuyage possible sans dégradation ne sont compatibles qu'avec l'interprétation suivante du phénomène. Après dépôt, la couche mince antireflet 3 est composée de colloïdes de silice dont la surface est hydroxylée. Cela signifie que les sites superficiels des particules sont des silanols (Si-OH). La présence de vapeurs alcalines sert de catalyseur à des réactions de condensation de surface de ces sites silanols, selon le mécanisme d'attaque nucléophile proposé par R.K. ILER, "The Chemistry of Silica" Wiley, New York, 1979 :

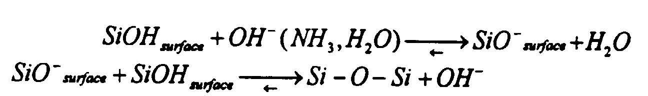

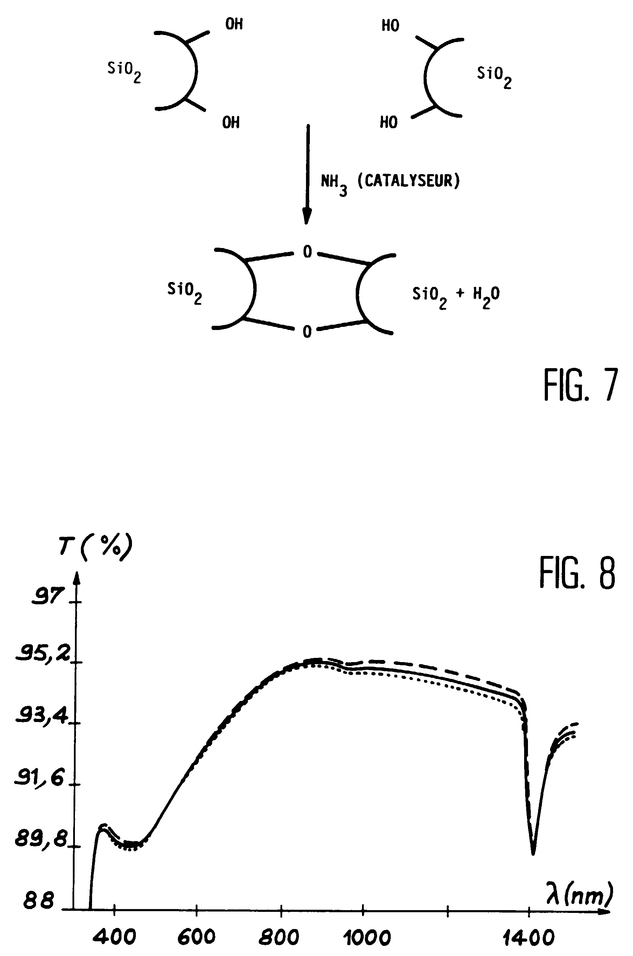

Cette réaction se résume à une déprotonation de surface et à une formation de liaisons chimiques interparticulaires par oxolation, comme illustré en figure 7.

La réticulation de surface des particules de silice renforce la cohésion mécanique de la couche antireflet et permet à celle-ci de résister davantage aux agressions abrasives. Par ailleurs, la déshydroxylation superficielle, (élimination de molécules d'eau), se traduit par un rapprochement physique des colloïdes et par conséquent par un amincissement global de la couche 3. Le rétrécissement de l'épaisseur de la couche n'est pas suffisant pour modifier sa compacité. La porosité reste quasiment inchangée et l'indice de réfraction est conservé.

Enfin, conjointement à l'amélioration de la résistance mécanique et aux modifications des propriétés optiques, les performances en matière de résistance au flux laser sont également meilleures pour les couches antireflets de silice colloïdale traitées à l'ammoniac. On note un gain d'environ 20% de la valeur du seuil de dommage laser exprimée en Joule/cm² après traitement ammoniacal. Cette augmentation du seuil est vérifiée à différentes longueurs d'onde (1064 nm à 355 nm), ainsi qu'à différentes durées d'impulsions laser (15 ns à 0,5 ns).

Il est possible d'effectuer un seul cycle de dépôt comprenant le dépôt de la couche antireflet, le séchage et le traitement alcalin, (voir exemple 1 ci-après), mais il est également possible d'effectuer plusieurs cycles successifs ou même d'alterner entre chaque cycle complet, le dépôt d'une autre couche colloïdale non traitée par des vapeurs alcalines (voir exemple 2 ci-après).

On donne ci-après deux exemples de réalisation du procédé selon l'invention.

### Exemple 1

### a) préparation du substrat

Le substrat 1 utilisé est un substrat en verre borosilicaté (type BK-7, fabriqué par la société Schott), d'un diamètre de 300 mm et d'une épaisseur de 10 mm. La qualité de polissage est de 1λ (λ égal 1064 nm) et l'indice de réfraction est de 1,51 à 600 nm de longueur d'onde. Ce substrat 1 est tout d'abord nettoyé selon la procédure suivante. Le nettoyage de la surface destinée à être recouverte est effectué avec une solution d'acide fluorhydrique diluée à 1% en volume. Ensuite, cette surface est rincée à l'eau pure désionisée et nettoyée à l'aide d'une solution détergente de savon végétal ("Green Soap", Eli Lilly.Co). Enfin, cette surface est rincée à l'eau pure puis à l'alcool éthylique filtré à 0,2µm.

### b) préparation et dépôt de la couche mince antireflet

On prépare une suspension colloïdale en mélangeant 1046,3 g d'éthanol absolu avec 136,7 g de tétraéthylorthosilicate distillé (167°C, 10⁵ Pa) . Le mélange est homogénéisé par agitation pendant 5 min. Tout en maintenant cette agitation, on ajoute alors 36,3 g d'ammoniaque à 28% en masse minimum. La réaction d'hydrolyse nécessite un minimum de 48 heures à 25°C pour être totale. Il survient alors une opalescence qui témoigne de la formation de colloïdes de silice. La mesure granulométrique effectuée révèle un diamètre moyen des colloïdes de 21±9 nm. Le pH final de ce sol est d'environ 10,5 et la concentration massique en SiO₂ est amenée de 3,2% à 1,5% avec de l'éthanol. Avant d'être utilisé ce sol de silice est filtré à 0,2µm.

Sur le substrat 1 nettoyé comme décrit préalablement, on dépose par enduction centrifuge et sur une face, une couche de sol de silice 3, à raison de 350 tr/min. Le séchage du film est effectué pendant 5 minutes. Le substrat ainsi traité révèle par spectrophotométrie les facteurs de transmission suivants :
T = 95,8% à 1100 nm (maximum),
T = 95,6% à 1200 nm,
T = 95,4% à 1000 nm.

La précision est de plus ou moins 0,3%. L'indice de réfraction de la couche de SiO₂ est de 1,22 à 1060 nm, dans ces conditions de dépôt ; ce qui correspond à une porosité de ladite couche de l'ordre de 50%.

### c) traitement du substrat :

Le substrat 1 revêtu de la couche mince 3 est placé face recouverte en haut sur un support dans une enceinte close d'un volume de 6 dm³, contenant environ 500 cm³ minimum d'ammoniaque à 28% en masse, dans son fond. La solution d'ammoniac à 28% en masse correspond à une solution commerciale courante. Le substrat 1, 3 est maintenu en confinement ammoniacal pendant un minimum de 12 heures.

### d) résultats :

Les propriétés apportées par ce traitement sont les suivantes :
- la transmission optique est conservée et elle atteint 95,8% à 900 nm (maximum),
- la résistance mécanique à l'abrasion et les propriétés améliorées d'adhésion de la couche mince permettent le contact physique et l'essuyage de la surface traitée avec un papier buvard imbibé d'alcool, ("drag-wipe" en anglais),
- les valeurs de tenue au flux laser dépassent 18 J/cm² avec une durée d'impulsion de 3 ns à 1064 nm et excèdent 50 J/cm² à 8 ns et 1064 nm.

Enfin, les performances optiques obtenues sont stables dans le temps et insensibles aux essuyages, (voir figure 8). Le courbe en trait plein illustre les résultats obtenus avec une monocouche de SiO₂ traitée par des vapeurs d'ammoniac, la courbe en pointillés illustre les résultats obtenus avec la même monocouche ayant subi des essuyages avec un papier buvard imbibé d'alcool et la courbe en tirets illustre les résultats obtenus avec une monocouche de SiO₂ traitée par des vapeurs d'ammoniac et vieillie pendant une durée d'au moins 10 jours. La juxtaposition quasi-parfaite de ces trois courbes montre que la couche traitée à l'ammoniac résiste au test de l'essuyage sans changement du point de vue optique et que ce traitement est irréversible et stable.

Il est possible de répéter le dépôt de la couche antireflet de silice colloïdale 3 sur l'autre face du substrat 1 et d'effectuer à nouveau le traitement par les vapeurs d'ammoniac. On obtient ainsi les mêmes performances de résistance mécaniques et de tenue au flux laser sur les deux faces avec des valeurs de transmission optique qui atteignent 99,8% à 900 nm, 99,5% à 1000 nm et 99,4% à 800 nm.

### Exemple 2

### a) préparation du substrat :

Le substrat utilisé est identique à celui de l'exemple 1 sauf que son diamètre est de 200 mm. La préparation et le nettoyage de sa surface sont identiques.

### b) préparation et dépôt de la couche mince antireflet et traitement alcalin :

La suspension colloïdale de silice est préparée de façon identique à celle décrite dans l'exemple 1.

En outre, on prépare une suspension colloïdale d'alumine hydratée en hydrolysant vigoureusement 246 g g de sec-butoxyde d'aluminium (1 mole) dans 3000 g d'eau désionisée (166 moles), à 65°C. On obtient ainsi un précipité blanchâtre volumineux d'oxyde d'aluminium hydraté. On extrait alors l'isobutanol par distillation à 98°C, à la pression atmosphérique (10⁵ Pa) et l'on porte l'ensemble à reflux à 100°C. On peptise alors le précipité par ajout de 7,0 g d'acide chlorhydrique concentré (0,07 mole) et on maintient l'ensemble sous reflux total pendant 15 heures environ. On obtient alors un sol colloïdal finement divisé d'aspect opalescent des particules d'alumine hydratée (type boehmite) de morphologie parallélépipédique (40x20x50 nm). La répartition de ces particules est monodispersée. Ce sol d'alumine hydratée est concentré sous vide jusqu'à atteindre 12% en Al₂O₃ (425 g). On obtient alors un produit sous forme d'une pâte gélatineuse que l'on peut aisément redisperser sous ultrasons, dans les alcools aliphatiques légers. On refluidifie ensuite le sol obtenu par dilution à 3,5% en Al₂O₃ dans du méthanol pur. Le pH du sol est ramené de 3,5 à 5,5 par ajout d'oxyde de propylène (époxy 1-2 propane) qui neutralise l'excès d'acide chlorhydrique, sans perdre la stabilité du sol colloïdal. La proportion d'oxyde de propylène rajoutée correspond à un rapport molaire (oxyde de propylène/acide chlorhydrique) de 1 dans le mélange et l'équilibre en pH n'est atteint qu'après plusieurs jours d'agitation. Avant utilisation, ce sol est dilué à 2,5% avec du méthanol et filtré sur un tamis en fibre de verre.

Sur le substrat 1 nettoyé, on dépose par enduction centrifuge, une couche de sol de silice à raison de 250 tr/min. Le séchage de cette couche dure pendant 5 minutes. Ensuite, la couche de silice 3 est traitée à l'aide de vapeurs alcalines d'ammoniac dans une enceinte close, comme dans l'exemple 1, pendant 15 minutes. Dans ce cas, un traitement alcalin de 15 minutes environ suffit, car le but est d'accroître la résistance mécanique des couches de silice et de permettre leur empilement sans écaillage.

On dépose ensuite une couche de sol d'alumine hydratée à la vitesse de 600 tr/min. Le dépôt d'alumine est laissé à l'air libre durant 10 minutes pour le séchage.

On répète cette procédure de dépôt alternatif plusieurs fois, jusqu'à obtenir un miroir présentant 37 couches au total, c'est-à-dire 19 couches de SiO₂ alternées avec 18 couches d'alumine hydratée. La dernière couche déposée étant constituée de silice, on laisse séjourner l'empilement dans une atmosphère d'ammoniac pendant au minimum 12 heures. Ce traitement long permet alors d'obtenir les propriétés de résistance mécanique précitées.

### c) résultats :

Le miroir ainsi réalisé possède une réponse spectrale qui sous incidence normale (0°) donne une réflexion de 99,2±1% à une longueur d'onde de 1053 nm, 90,0±1,5% à 530 nm et 85,0±1,5% à 351 nm.

Ce film réfléchissant 3 est exempt de craquelures, est assez homogène et contient des monocouches de SiO₂ et d'Al₂ O₃₋H₂O dont les indices de réfraction respectifs sont de 1,22 et 1,43 à 1053 nm. Les porosités respectives correspondantes sont de 50% et 35%.

Le miroir ainsi obtenu possède une certaine résistance mécanique et supporte sans dommage le contact physique, ainsi que des essuyages au papier optique imbibé d'éthanol ("drag-wipe" en anglais). Les mesures de seuil de dommage laser indiquent 49 J/cm² avec une durée d'impulsion de 10 ns, à une longueur d'onde de 1064 nm et 20 J/cm², à une durée d'impulsion de 3 ns et 1064 nm de longueur d'onde.

## Revendications

1. Procédé de fabrication de couches minces présentant des propriétés optiques et des propriétés de résistance à l'abrasion, comprenant au moins un cycle composé des étapes consistant à :
- appliquer sur un substrat (1) au moins une couche de sol-gel antireflet (3) constituée par une suspension colloïdale d'oxyde de silicium dispersée dans un alcool aliphatique,
- laisser sécher cette couche antireflet (3),
- faire subir au substrat (1) recouvert de ladite couche (3) de silice colloïdale, un traitement alcalin en milieu liquide ou gazeux.

2. Procédé de fabrication de couches minces selon la revendication 1, dans lequel le traitement alcalin en milieu gazeux, est effectué en plaçant le substrat (1) recouvert de la couche antireflet (3) séchée dans une enceinte étanche (5) remplie de vapeurs d'ammoniac.

3. Procédé de fabrication de couches minces selon la revendication 2, dans lequel la concentration en vapeurs d'ammoniac est comprise entre 5 et 50% en masse à l'intérieur de ladite enceinte (5).

4. Procédé de fabrication de couches minces selon la revendication 2 ou 3, caractérisé en ce que la durée de traitement par les vapeurs d'ammoniac est comprise entre 2 et 24 heures.

5. Procédé de fabrication de couches minces selon la revendication 1, dans lequel le traitement alcalin en milieu liquide est effectué en plongeant le substrat (1) recouvert de la couche antireflet (5) séchée, dans une solution alcaline (15) choisie parmi la soude, la potasse, le tétraméthylammonium hydroxyde, l'hydroxylamine, la diéthanolamine ou l'ammoniaque, cette solution alcaline (15) étant diluée dans un solvant présentant une constante diélectrique faible.

6. Procédé de fabrication de couches minces selon la revendication 5, dans lequel le solvant de la solution alcaline est choisi parmi les alcools aliphatiques.

7. Procédé de fabrication de couches minces selon l'une quelconque des revendications précédentes, dans lequel on effectue le dépôt d'une couche mince présentant des propriétés optiques, entre chaque cycle de dépôt d'une couche antireflet (3) ayant subi un traitement alcalin.

## Patentansprüche

1. Herstellungsverfahren für Dünnschichten mit optischen und abriebfesten Eigenschaften, wenigstens einen Zyklus mit den folgenden Schritten umfassend:
- auf ein Substrat (1) wenigstens eine Sol-Gel-Antireflexschicht (3) aufbringen, gebildet durch eine kolloidale Lösung aus Siliciumoxid, dispergiert in einem alipathischen Alkohol,
- diese Antireflexschicht (3) trocknen lassen,
- das mit besagter Schicht (3) aus kolloidalem Siliciumdioxid überzogene Substrat (1) einer alkalischen Behandlung in flüssigem oder gasförmigem Milieu unterziehen.

2. Herstellungsverfahren für Dünnschichten nach Anspruch 1, bei dem die alkalische Behandlung im gasförmigen Milieu durchgeführt wird, indem man das mit der getrockneten Antireflexschicht (3) überzogene Substrat (1) in einen mit Ammoniakdämpfen gefüllten dichten Behälter (5) gibt.

3. Herstellungsverfahren für Dünnschichten nach Anspruch 2, bei dem die Ammoniakdampfkonzentration im Innern des genannten Behälters (5) enthalten ist zwischen 5 und 50 % Massenanteil.

4. Herstellungsverfahren für Dünnschichten nach Anspruch 2 oder 3, dadurch gekennzeichnet, daß die Behandlungsdauer durch die Ammonikadämpfe enthalten ist zwischen 2 und 24 Stunden.

5. Herstellungsverfahren für Dünnschichten nach Anspruch 1, bei dem die alkalische Behandlung im flüssigen Milieu durchgeführt wird, indem man das mit der getrockneten Antireflexschicht (3) überzogene Substrat (1) in eine alkalische Lösung (15) taucht, ausgewählt unter Natronlauge bzw. Natriumhydroxid, Kalilauge bzw. Kaliumhydroxid, Tetramethylammoniumhydroxid, Hydroxylamin oder Ammoniak, wobei diese alkalische Lösung (15) verdünnt wird in einem Lösungsmittel, das eine geringe dielektrische Konstante aufweist.

6. Herstellungsverfahren für Dünnschichten nach Anspruch 5, bei dem das Lösungsmittel der alkalischen Lösung ausgewählt wird unter den alipathischen Alkoholen.

7. Herstellungsverfahren für Dünnschichten nach einem der vorangehenden Ansprüche, bei dem man zwischen jedem Aufbringungszyklus einer Antireflexschicht (3), die einer alkalischen Behandlung unterzogen wurde, die Abscheidung einer Dünnschicht mit optischen Eigenschaften durchführt.

## Claims

1. Process for producing thin coatings having optical and abrasion resistance properties, comprising at least one cycle constituted by the steps consisting of:
- applying to a substrate (1) at least one antireflection sol-gel coating (3) constituted by a colloidal suspension of silicon oxide dispersed in an aliphatic alcohol,
- allowing said antireflection coating (3) to dry,
- subjecting the substrate (1) covered with said colloidal silica coating (3) to an alkaline treatment in a liquid or gaseous medium.

2. Process for the production of thin coatings according to claim 1, wherein the alkaline treatment in a gaseous medium is carried out by placing the substrate (1) covered with the dried antireflection coating (3) in a tight enclosure (5) filled with ammonia vapours.

3. Process for producing thin coatings according to claim 2, wherein the ammonia vapour concentration is between 5 and 50 wt.% within said enclosure (5).

4. Process for producing thin coatings according to claim 2 or 3, wherein the duration of the ammonia vapour treatment is between 2 and 24 hours.

5. Process for producing thin coatings according to claim 1, wherein the alkaline treatment in the liquid medium is performed by immersing the substrate (1) covered by the dried antireflection coating (5) in an alkaline solution (15) chosen from among soda, potash, tetramethyl ammonium hydroxide, hydroxyl amine, diethanol amine or ammonia, said alkaline solution (15) being diluted in a solvent having a low dielectric constant.

6. Process for producing thin coatings according to claim 5, wherein the solvent of the alkaline solution is chosen from among aliphatic alcohols.

7. Process for producing thin coatings according to any one of the preceding claims, wherein a thin coating having optical properties is deposited between each deposition cycle for an antireflection coating (3) having undergone an alkaline treatment.
